# EUROPEAN PATENT SPECIFICATION

(11) **EP 1 640 408 B1**
(45) Date of publication and mention of the grant of the patent: **04.06.2008**
(21) Application number: 05255999.4
(22) Date of filing: 27.09.2005
(51) Int. Cl.: C08K 3/00, C08K 5/00, C08K 3/08, C08K 3/16, C08K 3/30, C08K 5/098, C08K 5/1535, C08J 3/22, C08K 9/04, C08L 67/02

(54) **Oxygen scavenging composition**
Sauerstofffängerzusammensetzung
Composition de piégeage d'oxygène

(30) Priority: 27.09.2004 IN CH09852004
(43) Date of publication of application: 29.03.2006
(73) Proprietor: Futura Polyesters Limited, Mumbai 400 013 (IN)
(72) Inventor: Tammaji, Kulkarni Sanjay, Chennai 600 068, Tamil Nadu (IN); Harish, Bisht, Chennai 600 068, Tamil Nadu (IN)
(74) Representative: Williams, Paul Edwin

(56) References cited:
- EP-A- 0 370 802
- WO-A-20/04067616
- US-A- 5 977 212
- US-A1- 2003 027 912
- US-A1- 2003 108 702
- US-A1- 2004 094 745
- US-B1- 6 656 383
- DATABASE WPI Section Ch, Week 199732 Derwent Publications Ltd., London, GB; Class A23, AN 1997-347618 XP002354745 -& JP 09 143364 A (DAICEL CHEM IND LTD) 3 June 1997 (1997-06-03)
- DATABASE WPI Section Ch, Week 200127 Derwent Publications Ltd., London, GB; Class A92, AN 2001-260420 XP002354746 -& JP 2001 009273 A (AJINOMOTO KK) 16 January 2001 (2001-01-16)

## Description

This invention relates to polyester resins used in food packaging applications for foods and other items for human consumption.

Particularly, this invention relates to polyester resins used for packaging oxygen sensitive food items including alcoholic beverages, fruit beverages and the like, where the oxygen permeation levels are to be maintained at very low levels.

In this specification the term 'polyester resin' or 'carrier resin' or 'resin carrier' is understood to mean and include any thermoplastic homopolymer or a copolymer, for example a PET(Polyethylene Terephthalate) resin, a PTN(Polytrimethylene Naphthalate) resin, a PBN(Polybutylene Naphthalate) resin, a Polytrimethylene Terephthalate (PTT) resin, or a PBT(Polybutylene Terephthalate) resin, or a combination or alloy blend of any of these alone or with a naphthalate or butylene compound, and includes all linear or branched polyesters. Preferably, the 'carrier resin' or 'resin carrier' is a resin having a lower melting point than the 'polyester resin'.

Polyester resins and carrier resins are typically prepared by processes well known in the art, which typically comprise reacting a diol such as 1,3 propanediol, 1,4 butenediol, ethylene glycol, trimethylene glycol, or resorcinol with a dicarboxylic acid such as terephthalic acid, isopththalic acid, or its esters such as phthalic esters or naphthalic esters in a melt phase polymerization step in an approximate 1:1 stoichometric reaction, preferably in the presence of a catalyst such as antimony or titanium compounds. Melt phase polymerization is followed by post polymerization steps such as crystallization in the temperature range of 100 to 150 degrees Celsius and solid phase polymerization in the temperature range of 195 to 235 degrees Celsius either in a discontinuous batch process or a continuous solid state process. These steps increase the intrinsic viscosity of the resin to a value suitable for conversion into a desired packaging material.

These resins are converted to walled containers for food items and other items typically by extrusion, a blow molding process, or an injection molding or stretch blow molding process, or the resin is extruded in the form of a film which is in turn used for making containers such as pouches for packaging food and other items. Hereinafter, the term 'container' will deem to include all containers whether rigid walled or flexible walled, of any shape or size and dimensions, and includes a pouch, a blister pack, a pharmaceutical pack, a bottle, and a lidded container.

One of the parameters affecting the efficiency of these containers is its oxygen transmission and absorption property. Gases affect items packaged in these containers in two primary ways. Each resin has its own gas transmission rate and a walled container, depending on the thickness of the wall and other parameters, will transmit moisture and gases according to a predetermined 'transmission rate'. Secondly, many packaged items release gases in the packed state and these gases again need to be dealt with. Gases, particularly oxygen, affect the items stored within these containers, in that, they effect the freshness, taste and cause deterioration of the nutrients and flavor components of items, particularly food and medicinal products. Also the formation of oxidative by-products affects product quality.

One of the measures used to attenuate the affect of gases is the use of preservatives like sorbates, ascorbates, benzoates, and sulfur dioxide. The use of such preservatives is now being seriously questioned. In fact, the use of preservatives is increasingly being banned.

Another method of preventing the ingress of oxygen is the use of 'passive barrier' methods. "Passive" gas barrier protection is offered by certain polymeric layers like ethylene vinyl alcohol (EVOH) or polyvinylidene dichloride (PVDC). In passive barrier there is only a physical blocking of oxygen ingress or egress from the container and there is no reaction with the oxygen. Oxygen scavenging by polymer barrier films especially in the form of multi layers is well known and described in several prior art references including the following US Patents : 5,648,020, 5,498,364, 5,425,986, 5,399,289, and 5,350,622, which deal with an oxygen barrier layer in a multi layered container. Such layers are generally of EVOH, PVDC, polyisoprene and the like.

Yet another method of reducing oxygen is the use of oxygen scavenging agents in the resin, which act as a barrier to oxygen or which absorb oxygen entrapped in the container. These are referred to popularly as 'active barrier protection agents'. "Active" oxygen barrier agents or scavenging agents act as barriers to oxygen. In active oxygen protection there is reaction with the oxygen by the oxygen scavenging agent and this scavenging process protects an oxygen sensitive product by not only preventing oxygen from reaching the product from the outside but also absorbing oxygen present within a container.

The benefits of oxygen scavenging are numerous. Reduced oxygen enhances freshness, retains taste and protects nutrients and flavor components of food products. Also the formation of oxidative by-products which may affect product quality are decreased. It also eliminates the need for using preservatives like sorbates, ascorbates, benzoates, sulfur dioxide and the like.

Various types of oxygen scavengers are used in packaging systems in order to protect them from the detrimental effects of oxygen exposure. There are primarily three types of oxygen scavengers, which are widely utilized. The most conventional approach is the use of metal based absorbers such as iron or its lower oxides, Cobalt or Copper based metals or their lower oxides. Here, the finely divided metal or its lower oxide gets oxidized to its higher state by oxygen in the presence of appropriate humidity or moisture conditions. The second approach of oxygen scavenging is by making use of low molecular weight organic compounds like ascorbic acid or sodium ascorbate which bind oxygen by oxidizing carbon-carbon double bonds. The third method incorporates a polymeric based oxygen scavenging resin along with a catalyst. The polymeric system binds oxygen through oxidation of the polymer chain. Irrespective of the type of oxygen absorber, oxygen scavengers have to satisfy certain other requirements. For instance, the oxygen scavengers should not be themselves affected during the process of extrusion, they should not impair the look of the container, they should not affect the clarity of the container and finally they should conform to existing packaging processes and equipment.

A variety of oxygen scavengers have been suggested both in monolayer and multilayer containers. For example, in the OXBAR barrier system the oxygen scavenging component is a polyamide like MXD-6 nylon coupled with a transition metal catalyst (e.g. cobalt). This type of oxygen scavenger has been described in US Patents 5,759,653, 5,239,016, 5,049,624, 5,034,252, 5,021,515 et al., EP 380,830, 380,319, 301,719 and in New Zealand Patent 227,779.

US Patents 5,518,792 and 5,405,880 suggest oxygen scavengers based on polypropylene, US 5,399,289, 5,310,497 and 5,211,875, EP 0520257 and WO 95/04776 have suggested polybutadiene, US patents 5,700,554 and 5,529,833 disclose polyisoprene, US 5,492,742, 5,364,555, 6,465,065 & 6,391,406 and EP 328336 disclose monomeric and oligomeric oxidizable compounds such as ascorbic acids and ascorbates, salicylic acid, US 5,529,833 discloses the use of chelates squalene and unsaturated fatty acids; WO 94/12590 discloses polyterpenes and dihydroanthracene. Compositions comprising copolyamides consisting of 50 % polyamide segments and active oxygen scavenging polyolefin oligomer segments are disclosed in US 6,506,463. A mixture of polymers which comprises at least 40 % of 2,6-naphthalate units and up to 60 % ethylene terephthalate units giving a high oxygen barrier is described in US 6,534,169.

AmosorbDFC oxygen scavengers from BP Amoco are block polycondensates comprising predominantly polycondensate segments and an oxygen scavenging amount of polyolefin oligomer segments like polybutadiene especially in the presence of a transition metal catalyst, such as cobalt and optionally with benzophenone, and are described in US 6,558,762, and 6,365,247.

Chevron Phillips in association with Cryovac Corp. has developed an oxygen scavenging polymer (OSP) which claims distinction from other oxygen scavenging polymers in that scavenging is conducted without the generation of degradation products that may easily migrate out of the polymer matrix which in turn could cause negative organoleptic effects.

The OSP system is a blend of two components - 90% of the blend is an oxidizable polymer, ethylene methacrylate cyclohexnyl methyl acrylate (EMCM) as the oxidizable resin, and 10 % is a catalyst master batch consisting of a cobalt salt and a proprietary photoinitiator (PI). The oxygen scavenging process is catalyzed by the formation of free radicals triggered by the UV activation process. (US Patents 5,627,239 & 5,736,616, and WO 9948963, 98/51758 and 98/51759).

ActiTUF developed by M & G Polymers has a proprietary oxygen scavenger technology which gets activated only when the container is filled with beverage.

Inert thin film barrier coatings like ActisTM film of amorphous carbon, Diamond-Like-Carbon (DLC), Bairocade a thermo set epoxy amine, Plasma-Enhanced Chemical Vapor Deposition (PECVD) of silicon dioxide, Glaskin silicon dioxide etc. are generally used for good barrier properties for gases like oxygen, carbon dioxide and the like.

Nanocomposites, like clays dispersed in a polymer matrix, which create a tortuous path for the passage of gas provide effective barrier improvement. AegisOX is a polymerized nanocomposite nylon resin specially formulated for high oxygen and carbon dioxide barrier performance. Triton has a patented technology based on the inclusion of inert inorganic fillers that exhibit a platelet nanostructure which can be easily compounded with a base resin like PET to improve the barrier property.

Also, in the emerging gas barrier technology Liquid Crystal Polymers play an important role.

Most of these commercial oxygen scavengers are capable of absorbing significantly less than 0.4ml of oxygen per gram of the copolymer.

The oxidation of iron (Fe) is the basis for some widely used oxygen scavenger systems. Oxygen absorption occurs in two stages and requires water vapor to be present. The Fe first combines with oxygen and water to form ferrous hydroxide. Further reaction with oxygen and water forms ferric hydroxide which gets stabilized as hydrated ferric oxide:

4Fe + 6H₂O + 3O₂ → 4Fe(OH)₃ → 2Fe₂O₃.6H₂O

The amount of oxygen adsorbed is a function of initial Fe powder morphology and its specific surface area. By stoichiometry for typical materials one gram of Fe will absorb approximately 300ml of oxygen.

Iron based oxygen absorbers have been suggested in US Patent 4,127,503 of Nov.28,1978 which describes iron based oxygen absorbers having a metal powder, preferably iron, covered with a metal halide. Ageless developed by Mitsubishi Corp. is composed of finely divided ferrous oxide, a chloride salt and a humectant sealed inside a permeable paper or plastic packet much like that used for silica gel, but unlike silica gel the packets cannot be reused once exhausted.

US 4,192,773 describes metal halide coated iron powder as oxygen scavengers.

Other oxygen-scavenging systems are disclosed in US 4,299,719 which states that ferrous carbonate can be combined with a mixture of a reduced iron powder and a metal halide, or an alkali metal hydroxide and/or an alkaline earth metal hydroxide or calcium oxide to give oxygen absorbing composition, and US 4,510,162 which discloses an oxygen absorbent composition comprising iron particles and yeast mixed together with moisture, the moisture being provided by a vinegar/water solution or a mixture of ascorbic acid and sodium bisulfate.

US 4,711,741 makes use of iron in combination with halogen containing oxyacid salts like NaClO₄ or NaClO₃ as a composition for oxygen absorbing.

Oxygard is a polymer based oxygen scavenger containing about 75 % polyolefin and 25 % reduced iron and is described in US Patent 5,153,038.

US 5,928,560 claims acceleration of oxygen absorption rate in the iron system, besides water, by the addition of an acid.

US 6,899,822 describes an oxygen absorbing composition for use as a component of a plastic packaging material which includes in relatively sufficient proportions iron, acidifier and electrolyte with the latter two components at high concentrations.

US 6,780,916 deals with a resin composition of film forming polyester of PET, PEN, PBT & PTT containing an oxygen scavenger comprising iron particles as the preferred metal amongst other metals and having a size of between about 1 to 70 microns. Though the color and haze values are discussed for the stretch blow molded bottles, no information is available on the oxygen scavenging capacity of the resin.

US 6,666,988 and 6,508,955 describe an iron-based oxygen scavenging packet which exhibits an increased rate of oxygen absorption in the presence of an accelerator comprising water. The addition of an electrolyte, either dissolved in the water or added as a solid in the oxygen scavenger packet, further increases the rate of oxygen uptake. Electrolytes like NaCl, MgCl₂ & CaCl₂ are suggested.

JP 62-215,010 discloses a deodorizing fiber obtained by treating thermoplastic fibers with inorganic particles of divalent ferrous iron and L-ascorbic acid.

US 6,616,861 claims a rapid rate of oxygen absorption by introducing an alcohol-water mixture as an activator for iron-based absorber systems.

US 6,586,514 describes oxygen-scavenging compositions comprising an oxidizable metal component, an electrolyte component and a solid, non-electrolytic, acidifying component. Examples of oxidizable metals disclosed include iron, zinc, copper, aluminum, and tin. Examples of suitable electrolyte components include various electrolytic alkali, alkaline earth and transition metal halides, sulfates, nitrates, carbonates, sulfites and phosphates, such as sodium chloride, potassium bromide, calcium carbonate, magnesium sulfate and cupric nitrate.

All the aforesaid prior art suggestions require that to obtain sufficient oxygen absorption in active-barrier packaging, high loadings of scavenger compositions, including the iron particle based compositions, are often necessary. This typically requires that wall structures of the bottles containing a scavenging composition be relatively thick which results in other undesirable characteristics.

From the prior art on iron based oxygen scavengers it is clear that iron based oxygen scavengers have been used predominantly for food packaging applications and sparingly for demanding applications, such as for packaging beer, fruit juices, ketchup and the like in polyester bottles wherein, because of the nature of the products, the permissible oxygen permeation level is very low.

There is a need for an oxygen scavenging agent and a resin blend for food packaging applications, for foods required particularly for human consumption, especially oxygen sensitive food items such as alcoholic beverages (e.g. beer), fruit beverages, where oxygen levels permitted are relatively very low.

An object of this invention is to seek to provide packaging media with an oxygen scavenging composition of the present invention for storing human consumption food items.

Another object of this invention is to seek to provide an oxygen scavenging composition, which does not substantially affect the color of the article, typically a bottle or other polymer container made from the resin incorporating such an agent.

Another object of this invention is to seek to provide such an oxygen scavenging agent which will perform with desired results with relatively lesser amount of loadings.
Yet another object of the invention is to seek to provide an oxygen scavenging composition which is easy to handle, store and utilize, and which does not warrant elaborate precautions and practices.

The applicant has surprisingly found that the use of fine iron particles in the micron range combined with nano sized iron particles either alone or in combination with a halide promoter and an acid salt catalyst enhances the oxygen absorption rate of an oxygen scavenging composition and meets with the objects of this invention.

According to one embodiment of the invention even better advantage is obtained by incorporating the oxygen scavenger as a master batch in a carrier resin comprising a passive barrier component like PTN or an alloy blend of PET with PTN or PET with PBN and deriving the advantage of both active and passive oxygen barrier properties.

The primary feature of the present invention is the provision of an oxygen scavenging composition comprising a judicious mixture of micron size and nano-sized iron particles and additives dispersed uniformly in a suitable non-reactive carrier resin having a passive barrier component of an alloy blend of PET with PTN or PBN or PBT and the like, as a master batch having a lower melting point to facilitate easy and uniform dispersion of the active component in a passive barrier medium acting as the carrier.

Therefore, the oxygen scavenging composition in accordance with this invention acts both as an active and a passive barrier and is triggered by moisture / water for its reaction with oxygen.

Yet another feature of the present invention is the development of a master batch containing a carrier resin comprising alloy blends of PET with PTN, PBN or PBT or their copolyesters as the carrier and having a maximum high loading (preferably of ~ 25 %) of the oxygen scavenger incorporated in it.

One more feature of the present invention is to have in the carrier resin used for the master batch, passive barrier additives, amber or other color pigment composition and ultraviolet light absorbers which are critical for sensitive packaging applications like alcoholic beverages (e.g. beer).

A particular feature of the present invention is the benefit of delayed action of oxygen absorption arising from the presence of a mixture of relatively coarse and fine micron sized iron particles in addition to the nano sized particles.

One more feature of the present invention is the additional passive oxygen scavenging action performed by the carrier resin, like the alloy of PET with PTN, PBN or PBT and their blends, but more preferably by the alloy of PTN with PET blend, due to their excellent passive barrier action towards gases.

According to this invention there is provided an oxygen scavenging composition for polyester resins comprising
a resin carrier; and
an iron particles mixture dispersed in the said resin carrier
said iron particles mixture comprising
[i] micron-sized iron particles having a particle size in the range of 1 to 50 microns;
[ii] nano-sized iron particles having a particle size in the range of 5 to 50 nanometers.

In accordance with one embodiment of this invention, the micron-sized iron particles have a particle size in the range of 1 to 10 microns.

In accordance with another embodiment of this invention, the micron-sized iron particles have a particle size in the range of 15 to 30 microns.

In accordance with still another embodiment of this invention, the micron-sized iron particles comprise a mixture of iron particles having a particle size in the range of 1 to 10 microns and 15 to 30 microns.

Preferably, the ratio of the quantity of iron particles in the range of 1 to 10 microns to the ratio of the particles in the range of 15 to 30 microns is from 1: 0.10 to 1: 0.80.

Preferably, the carrier resin is a polyester resin.

Preferably, the carrier resin is a polyester resin having a maximum melting point temperature in the range of 228 to 230° C

Preferably, the carrier resin is PTN, an alloy of PET with PTN, its copolyesters or its blends, or an alloy of PET with PBN, its copolyesters or its blends, more preferably in a ratio of a maximum of 75:25 %.

The ratio of the mass of carrier resin to the mass of said mixture of iron particles may be in the range of 1: 0.01 to 1: 0.08, and the ratio of the mass of the micron-sized iron particles to the mass of the nano-sized iron particles may be in the range of 1: 0.10 to 1: 0.20.

According to another aspect of this invention there is provided an oxygen scavenging composition for polyester resins comprising a resin carrier;
an iron particles mixture dispersed in the said carrier
said iron particles mixture comprising
[i] micron-sized iron particles having a particle size in the range of 1 to 50 microns;
[ii] nano-sized iron particles having a particle size in the range of 5 to 50 nano-meters; and
at least one oxidation reaction accelerator.

Typically, the oxidation reaction accelerator is at least one alkali metal bisulfate selected from a group of alkali metal bisulfates consisting of sodium bisulfate, calcium bisulfate, potassium bisulfate, and magnesium bisulfate.

A preferred oxidation reaction accelerator is at least one compound selected from a group consisting of sodium bisulfate and potassium bisulfate.

In accordance with another embodiment of the invention, the oxidation reaction accelerator is a metal halide, preferably a metal halide selected from a group of metal halides consisting of Barium chloride, Calcium chloride, Iron(II) chloride, Iron(III) chloride, Lithium chloride, Magnesium chloride, Magnesium fluoride, Potassium bromide, Potassium chloride, Potassium iodide, Sodium bromide, Sodium chloride, Sodium iodide, Strontium chloride, and Zinc chloride.

A preferred oxidation reaction accelerator is at least one metal halide selected from a group consisting of sodium chloride and potassium chloride.

More preferably, the oxidation reaction accelerator is a mixture of at least one alkali metal bisulfate and at least one metal halide.

In accordance with another embodiment of the invention the oxidation reaction accelerator comprises at least one metal ascorbate, preferably a metal ascorbate selected from sodium ascorbate, potassium ascorbate, magnesium ascorbate, calcium ascorbate, zinc ascorbate, and chromium ascorbate.

The oxidation reaction accelerator may comprise accelerator a mixture of at least one alkali metal bisulfate and at least one metal ascorbate, or a mixture of at least one alkali metal halide and at least one metal ascorbate, or a mixture of at least one alkali metal bisulfate, at least one metal halide and at least one metal ascorbate.

The ratio of the mass of the carrier resin to the mass of the oxidation reaction accelerator is preferably in the range of 1: 0.001 to 1: 0.01.

In accordance with another embodiment of the invention, the iron particles are pre-treated with C₃ to C₈ alcohols selected from a group consisting of n-propanol, n-butanol, pentanol, hexanol, septanol and octanol, Isopropyl alcohol, Isobutyl alcohol, Sec- butyl alcohol, Tertiary butyl alcohol, Isopentyl alcohol , Tertiary pentyl alcohol, Neopentyl alcohol, Cyclopentyl alcohol, Cyclohexyl alcohol and Allyl alcohols, preferably under refluxing conditions.

In accordance with another aspect of this invention there is provided an oxygen scavenging composition for polyester resins comprising a resin carrier;
an iron particles mixture dispersed in the said carrier,
said iron particles mixture comprising
[i] micron-sized iron particles having a particle size in the range of 1 to 50 microns;
[ii] nano-sized iron particles having a particle size in the range of 5 to 50 nano-meters;
an oxidation reaction accelerator; and
a barrier additive.

In accordance with yet another aspect of this invention there is provided an oxygen scavenging composition for polyester resins comprising a resin carrier;
an iron particles mixture dispersed in the said carrier,
said iron particles mixture comprising
[i] micron-sized iron particles having a particle size in the range of 1 to 50 microns;
[ii] nano-sized iron particles having a particle size in the range of 5 to 50 nano-meters;
an oxidation reaction accelerator;
a barrier additive;
a color imparting additive, and an ultraviolet light absorber.

The barrier additive is preferably at least one barrier additive selected from a group containing sub-micronic sized particles of clay and sub-micronic sized particles of silica.

In accordance with an aspect of this invention there is provided a method of preparing an oxygen scavenging composition for polyester resins comprising the steps of
(i) preparing a mixture of dried micron-sized iron particles having a particle size in the range of 1 to 50 microns and dried nano-sized iron particles having particle size in the range of 5 to 50 nano-meters to form an iron particle mix ;
(ii) substantially uniformly dispersing the said iron particle mix up to a maximum of 25% in a resin carrier to form a master batch ; and
(iii) storing the said master batch in an inert atmosphere until required for adding to a polyester resin for imparting oxygen scavenging properties.

In accordance with an aspect of this invention there is provided a method of preparing an oxygen scavenging composition for polyester resins comprising the steps of
(i) preparing a mixture of dried micron-sized iron particles having a particle size in the range of 1 to 50 microns and dried nano-sized iron particles having a particle size in the range of 5 to 50 nanometers to form an iron particle mix and adding at least one oxidation reaction accelerator to the iron particle mix to form a dry homogenous mixture;
(ii) substantially uniformly dispersing the said homogenous mixture up to a maximum of 25% in a resin carrier to form a master batch ; and
(iii) storing the said master batch in an inert atmosphere until required for adding to a polyester resin.

The iron particle mix or homogenous mixture is preferably refluxed with at least one alcohol from the C3 to C8 group of alcohols and the resultant mixture is dried at up to 75 degrees Celsius.

The step of dispersing the said iron particle mix in the resin carrier may be performed by adding the iron particle mix to the resin carrier in an extruder after thoroughly mixing the said iron particle mix , maintaining the extruder at a temperature between 260 degrees Celsius and 285 degrees Celsius, extruding the strand of iron mix dispersed carrier resin, cooling the strand and cutting the strand into master batch chips.

In accordance with yet another aspect of this invention there is provided a method of imparting oxygen scavenging properties to a polyester resin comprising the steps of
(i) preparing a master batch containing an oxygen scavenging composition comprising a resin carrier; and an iron particles mixture dispersed in the said resin carrier said iron particles mixture comprising
   [a] micron-sized iron particles having a particle size in the range of 1 to 50 microns;
   [b] nano-sized iron particles having a particle size in the range of 5 to 50 nanometers
(ii) adding the said master batch to dry polyester resin prior to extrusion/injection molding/stretch blow molding the polyester resin such that the final quantity of the iron particle mix in the polyester resin is in the region of 2500 ppm to 3500 ppm.

Preferably, the melting point of the carrier resin is from 228 degrees Celsius to 230 degrees Celsius and the melting point of the polyester resin is from 246 degrees Celsius and 250 degrees Celsius.

The present invention further provides a polyester resin having incorporated therein an oxygen scavenging composition as substantially herein described, and a container defined by at least one wall, wherein the wall comprises a polyester resin comprising an oxygen scavenging composition as substantially herein described.

Therefore, the present invention provides an iron-based active oxygen scavenging composition comprising a mixture of iron particles of 1 to 50 microns, preferably a mixture of 1 to 10 microns and 15 to 30 microns, along with nano-sized iron particles having a particle size in the range of 5 to 50 nanometers (nm).

Accordingly, the present invention provides an Oxygen scavenging composition which acts both as an active and passive barrier, said composition comprising a resin carrier, mixed micron-sized and nano-sized iron particles, and optionally at least one alkali bisulphate, and/or a metal halide, and/or ascorbic acid or a metal ascorbate, and other desired additives.

The metal ascorbate may be at least one ascorbate selected from a group consisting of sodium ascorbate, potassium ascorbate, magnesium ascorbate, calcium ascorbate, zinc ascorbate, and chromium ascorbate.

The resin carrier is selected preferably from an alloy blend of Polyethylene terephthalate (PET) with Polytrimethylene Naphthalate (PTN), Polybutylene Naphthalate(PBN), Polybutylene Terephthalate (PBT), Isophthalic acid modified PET like PETI or their copolyesters and their alloy blends, preferably PET with PTN or PET with PBN due to their excellent passive barrier properties.

The iron particle mixture with a particle size in the range of 1 to 50 microns, preferably a mixture of 1 to 10 microns and 15 to 30 microns, along with nano-sized iron particles of 5 to 50 nanometers (nm) surprisingly has a synergistically additional enhanced rate of oxygen absorption. The oxygen scavenging composition for additional benefit may also include metal halides, ascorbates and bisulfates of alkali metals.

In an embodiment of the present invention, the oxygen scavenging composition comprises a carrier in the form of a polyester resin selected from an alloy of PET with PTN or PBN or their copolyesters and their blends, preferably PET with PTN or PET with PBN at a maximum of 75:25 % composition.

In another preferred embodiment of the present invention, the percentage of oxygen scavenger that is incorporated in said composition is up to a maximum of 25 %.

In yet another embodiment of the present invention, an electrolyte in the form of a metal halide to facilitate the oxidation of iron particles and bisulfates of alkali metals is incorporated in said composition.

In order to accelerate the oxidation reaction, an acidic component may be incorporated in said oxygen scavenging composition in the form of bisulfates of alkali metals and ascorbates of alkali metals. Bisulfates and ascorbates, being acidic in nature, accelerate the iron oxidation reaction by promoting the formation of hydronium ions (H₃O⁺). The hydronium ion helps in abstracting the electrons from iron and facilitates the formation of Fe²⁺, which is a prerequisite for its reaction with oxygen to act as the oxygen scavenger. The oxidation reaction is shown in the following sequence.

1. Fe → Fe²⁺ + 2e⁻

2. e⁻ + H₃O⁺ → H + H₂O

3. 4Fe + 3O₂ → 2Fe₂O₃

Advantageously, the iron particles used in the present invention are preferably pre-treated with C₃ to C₈ alcohols, preferably selected from Propanol, Butanol and the like, under refluxing conditions. These alcohols are effective reductants under dehydrogenation conditions and cause the renewal of the surface of iron particles i.e. they increase the exposure of the number of iron atoms per surface area which helps to increase the oxidation efficiency of iron.

The oxygen scavenging composition of the present invention may be compounded with carrier resins containing appropriate quantities of barrier additives, green, blue and amber color compositions, ultraviolet light absorbers and the like.

In an embodiment of the present invention, the said composition has an enhanced oxygen absorbing capacity of over 0.4ml/gm.

In another embodiment of the present invention the oxygen scavenging composition comprising a polyester resin is achieved by making use of melt mixing equipment, like twin screw extruders.

In yet another embodiment of the present invention, the pelletized master batch of the oxygen scavenging composition is dried and stored under an inert atmosphere, such as nitrogen, for further use.

The oxygen scavenging composition of the present invention gets triggered by the presence of moisture / water.

Appropriate quantities of the oxygen scavenging composition in accordance with this invention can be incorporated in a dried polyester resin, preferably selected from a group consisting of an alloy of PET with PTN or PBN or PBT or their copolyesters and blends, preferably PET with PBN or PBT and more preferably with PTN, prior to extrusion/injection molding/stretch blow molding. The quantities should be such that the final quantity of the iron particle mix in the polyester resin should be in the region of 2500 ppm to 3500 ppm.

PTN's excellent passive barrier properties compared to the other polymers towards gases are well known.

Table - I gives the comparison of the oxygen permeability of different polyesters. As a carrier for the oxygen scavenger in the present invention, PTN is preferred for the master batch because of its superior barrier properties towards oxygen, and the presence of PTN will augment the function of the iron particle mixture used in the present invention.

**TABLE - I Comparison of the Barrier Properties of different Polyesters towards Oxygen.**

| **Values are for biaxially oriented films and expressed as cc-mil/100in²/24hrs.atm** | | | |
|---|---|---|---|
| Polyester Type | O₂ Permeability | % Improvement in O₂ barrier over PET | Times better than (i.e. lower permeability) PET for O₂ |
| PET | 4.2 | - | - |
| PTT | 3.1 | 35 | 1.35 |
| PEN | 2.33 | 80 | 1.80 |
| PTN | 0.525 | 700 | 8.00 |

The active oxygen scavenger of the present invention has an increased oxygen absorption rate and is effective in its application at lesser loadings thereby improving the characteristics of the packaging, eg. bottle.

Since the oxygen scavenging composition in accordance with this invention is activated by contact with water or water vapor, mono-layered single-walled barrier bottles or containers made of polyester resin impregnated with the oxygen scavenging composition can be useful for packing highly oxygen sensitive food items, such as alcoholic beverages, fruit juices and health beverages, which require total absence of oxygen for the duration of intended shelf life.

A particular feature of the invention is that since part of the iron composition is nano-sized and similar in size to the wavelength of light it does not affect the clarity of the container. Also, the presence of nano-sized iron particles in the master batch described herein surprisingly also acts as a passive barrier in addition to its main active barrier function.

The invention is further illustrated by the following examples.

### Example 1

20 g of iron powder consisting of a mixture of particle sizes of ~6 micron, -24 micron and 10 nm in the ratio of 10:70:20 were refluxed with n-butanol for 12 hours. 200 mg of sodium bisulfate and 80 mg of sodium chloride were added along with 6 ml of water and further refluxed for 3 hours. Following this, the alcohol was distilled off and the mixed iron powder impregnated with the bisulfate and the metal halide was dried at 75°C and the resulting dry powder was stored under nitrogen. This dry oxygen scavenger was found to be capable of absorbing oxygen in the presence of moisture.

The iron particles mixture component of the oxygen scavenging composition was incorporated in carrier resin preforms and bottles made therefrom were tested for oxygen absorption by the gas chromatographic method.

The efficiency data of the Oxygen Scavenging component of the present invention in relation to known compositions was tabulated in the following Table - II, which was evaluated by a specially designed manometric method to provide a qualitative figure of oxygen absorption by Oxygen Scavenger, and also by a gas chromatographic procedure to obtain quantitative values in comparison with the theoretical values.

**TABLE - II Oxygen Absorbing Efficiency**

| **S.N O** | **SAMPLE** | **mm Hg RISE IN MANOMETER** | **% 0₂ ABSORBED (GC)** | **OXYGEN ABSORBED ml/g OF SAMPLE** | **REMARKS** |
|---|---|---|---|---|---|
| 1 | Oxygen Scavenger Powder (OS) of the present invention | 122-147 | 11-60 | 40-42 | Accelerated test by heating to 60°C- does not represent the saturation value. In a live situation slow reaction is preferred. |
| 2 | *Amosorb* Oxygen Scavenger (OS) Powder | 60-65 | - | 0.29 | Accelerated test |
| 3 | Oxygen Scavenging composition of the present invention as a master batch | 50 to 55 | 10 to 15 | 0.91 1 | Accelerated test |
| 4 | Oxygen Scavenger composition of the present invention in preforms | 11-16 | 70-92 | 0.18-0.83 | Values are for OS levels of 1000 to 3500 ppm in preforms |
| 5 | Preforms with *Amosorb* oxygen scavenger | 2 to 5 | - | 0.36 | 3000 ppm in performs |
| 6 | OS composition of the present invention in Bottles | - | 43 to 80 | 0.32 to 0.74 | Values are for OS levels of 2500 to 3500 ppm in bottles |

| | | | | | |
|---|---|---|---|---|---|
| Note: (i) In U tube manometer the mm Hg rise is directly proportional to the quantity of Oxygen absorbed by the oxygen scavenger. (ii) For gas chromatographic (GC) procedure, oxygen scavenger incorporated performs or bottles are powdered or cut into pieces and a known quantity is taken in a vial. To this a known quantity of water is added and heated to 60°C for 2 hours for acceleration of oxygen absorption. The head space air sample is analyzed by GC at definite time intervals. (iii) The theoretical quantity of oxygen capable of being absorbed by the oxygen scavenger is based on the oxygen absorption value of 300 ml per gram of iron. (iv) The ml/g value is another way of expressing the oxygen scavenging capacity which helps to compare with the published values for oxygen scavenger samples of the prior art. | | | | | |

The delayed action by the presence of the mixed micron sized iron particles as described in this invention is elaborated in the following Table - III. Example 1 was repeated with different compositions of the mixture of micron-sized iron particles. Nano-sized particles were not added so that the influence of the proportion of different sizes of micron particles can be clearly seen.

**TABLE - III Comparison of the oxygen absorbing rate by different micron-sized iron particles.**

| Sr.No. | Ratio of Micron size, ~6 micron : ~24 micron | Oxygen absorption, cc/g of sample after 2 hours. |
|---|---|---|
| 1. | 100:0 | 9.52 |
| 2. | 0:100 | 22.8 |
| 3. | 20:80 | 17.75 |
| 4. | 30:70 | 14.92 |
| 5. | 40:60 | 11.86 |

It is seen from the table that the oxygen absorption rate distinctly differs with the micron size and that the rate is less for the finer micron size. This delayed action is advantageous for alcoholic beverages like beer in the container, as the oxygen scavenger's capacity will last throughout the period of storing the alcoholic beverage and protect it from oxygen ingress.

The oxygen scavenger (OS) incorporated in the master batch with a carrier resin was blended with PET having different passive barrier additives and injection molded into preforms and subsequently stretch blow molded into bottles. The OS containing preforms and bottles were tested for their oxygen absorption capability by GC. Results are given in Table - IV.

**TABLE - IV Oxygen Absorption bv the OS in Preforms and Bottles by GC Method**

| **Serial No.** | **Preforms or Bottles** | **Weight, g** | **Volume, ml** | **% Oxygen Absorption** | **Ppm Oxygen Absorption** |
|---|---|---|---|---|---|
| 1 | Preform Amber Colored¹ | 28 | - | 27-34 | 15-18 |
| 2 | Bottle Amber Colored¹ | 28 | 500 | 41-48 | 23-27 |
| 3 | Bottle Amber Colored¹ | 20 | 250 | 51 | 24 |
| 4 | Preform Amber Colored ² | 28 | - | 42 | 24 |
| 5 | Preform Colorless ² | 28 | - | 40 | 31 |
| 6 | Bottle Amber Colored ² | 28 | 500 | 65 | 23 |
| 7 | Bottle Colorless ² | 28 | 500 | 61 | 32 |
| 8 | Preform Amber Colored ³ | 30/33 | - | 36/38 | 20/21 |
| 9 | Bottle Amber Colored ³ | 30 | 500 | 44 | 25 |
| 10 | Preform Amber Colored ⁴ | 30 | - | 32 | 18 |
| 11 | Bottle Amber Colored ⁴ | 30 | 500 | 45 | 25 |

| | | | | | |
|---|---|---|---|---|---|
| Resin Recipe: 1. Oxygen Scavenger at 2400 ppm (24:6 micron of 2000:400) in a PET carrier resin consisting of 0.63% naphthalate additive 2. Oxygen Scavenger at 2200 ppm (24:6 micron of 2000:200) in a PET carrier resin containing 5 % PTN 3. Oxygen Scavenger at 3400 ppm in a PET carrier resin containing 8 % PTN and 1000 ppm nano silica as an additional passive barrier additive 4. Oxygen Scavenger at 3400 ppm in a PET carrier resin containing 8 % PTN and 500 ppm each of nano silica and nano clay as additional passive barrier additives. | | | | | |

It follows from the table that the oxygen absorption by the OS in the bottles and is generally about 40 - 65 % of the theoretical absorption, which is understandable as the oxygen absorbing iron is dispersed in the polymer matrix and may not be easily available for combination with oxygen especially in the short period of testing time.

### Example 2

Example 1 was repeated except that the ratio of iron particles was changed to 70:10:20 of 6 micron, 24 micron and 10 nm.

### Example 3

Example 1 was repeated by changing the ratio of iron particles to 10:20:70 of 6 micron, 24 micron and 10 nm.

### Example 4

Example 1 was repeated by replacing NaCl with KCl.

### Example 5

Example 1 was repeated by replacing KHSO₄ with NaHSO₄.

### Example 6

Example 1 was repeated by replacing both NaCl and KHSO₄ with KCl and NaHSO₄.

### Example 7

Example 1 was repeated wherein in addition to the metal halides, 20 mg of sodium ascorbate was also added.

In Examples 1 to 7 the carrier resin for making the master batch was PET-PTN alloy. The Oxygen Scavenging capacities in these experiments followed the order Example 7>1>5>4>2>3>6.

Similar experiments, i.e. 1 to 7, were carried out with PET-PBN alloy instead of the PET-PTN alloy. Though the trend of Oxygen Scavenging capacities were same in these experiments, the Oxygen Scavenging efficiency was observed to be ~ 10% less than that observed with PET-PTN alloy as the carrier.

Experiments were also conducted to judge the performance of the Oxygen Scavenging composition with different % compositions of PTN as well as in different sized bottles. The oxygen absorption results obtained by Gas Chromatography are given in Table-V.

**TABLE - V Oxygen Scavenger's function with variation in % PTN and Bottle Size**

| **Serial No.** | **Preforms / Bottles** | **Weight, g** | **Volume, ml** | **% Oxygen Absorption** | **Ppm Oxygen Absorption** |
|---|---|---|---|---|---|
| 1 | Preform ¹ | 28 | - | 29.76 | 16.67 |
| 2 | Bottle ¹ | 28 | 500 | 37.50 | 21.00 |
| 3 | Preform ² | 28 | - | 27.33 | 15.30 |
| 4 | Bottle ² | 28 | 500 | 34.43 | 19.28 |
| 5 | Preform ³ | 24 | - | 34.10 | 19.10 |
| 6 | Bottle ³ | 24 | 330 | 43.84 | 24.55 |
| 7 | Preform ³ | 28 | - | 35.95 | 20.13 |
| 8 | Bottle ³ | 28 | 500 | 44.18 | 24.74 |
| 9 | Preform ³ | 33 | - | 38.2 | 21.39 |
| 10 | Bottle ³ | 33 | 650 | 44.6 | 24.98 |

| | | | | | |
|---|---|---|---|---|---|
| Resin Recipe: ^{1.} 25 % PTN in PET-PTN carrier resin Fe OS particles at 2500 ppm ^{2.} 15 % PTN in PET-PTN carrier resin Fe OS particles at 2500 ppm ^{3.} 8 % PTN in PET-PTN carrier resin Fe OS particles at 3400 ppm | | | | | |

As can be seen from the Table above the various preforms and bottles which contain the oxygen scavenger show sufficient oxygen absorption, which is satisfactory taking into consideration the presence of the oxygen scavenger iron particles mixture well dispersed in the polymer matrix.

Several advantages arise as a result of the oxygen scavenging composition of the present invention:
1. The composition increases the oxygen absorbing rates due to the presence of nano-sized iron particles which are so small and their aspect ratio is so high that properties improve with lower loadings of the oxygen scavenger as compared to the use of only micron-sized particles.
2. The oxygen scavenging composition of the present invention enhances the barrier properties of the polyester resin by slowing down the permeation of gas molecules through the resin matrix.
3. The oxygen scavenging composition of the present invention is of low cost and has an improved efficiency.
4. The oxygen scavenging composition of the present invention is used to provide active as well as passive oxygen barred packaging containers that can increase the shelf-life of oxygen-sensitive human consumption products by absorbing oxygen present inside the head-space of the container as well as from the container wall, in addition to absorbing oxygen permeating from the outside.
5. In the present composition, limitations in the form of coloration, bottle blowing difficulty, loss of strength in the bottles and decreased barrier performance in the bottles are overcome by adopting the oxygen scavenging composition having a combination of nano- and micron-sized metal particles.
6. In the present composition, the presence of mixed micron-sized particles of iron in addition to the nano-sized particles, helps in the delayed action of the oxygen scavenger to take care of oxygen ingress during prolonged storage.
7. Polyester carriers, like an alloy of PET with PTN, PBN and PBT, used in making the master batch containing the oxygen scavenger also play a role by their passive barrier effect to oxygen ingress. The preferred carrier resin is a PET-PTN alloy blend due to its excellent barrier properties.
8. The Fe based OS particles in the PET-PTN carrier resin are stable and in the bottle get triggered by moisture / water thus giving a reasonable shelf life for the resin and bottle.

## Claims

1. An oxygen scavenging composition for polyester resins comprising
a resin carrier; and
an iron particles mixture dispersed in the said resin carrier
said iron particles mixture comprising
[i] micron-sized iron particles having a particle size in the range of 1 to 50 microns;
[ii] nano-sized iron particles having a particle size in the range of 5 to 50 nanometers.

2. An oxygen scavenging composition for polyester resins as claimed in claim 1, in which the micron-sized iron particles mixture comprises particles having a particle size in the range of 1 to 10 microns.

3. An oxygen scavenging composition for polyester resins as claimed in claim 1, in which the micron-sized iron particules mixture comprises particles having a particle size in the range of 15 to 30 microns.

4. An oxygen scavenging composition for polyester resins as claimed in any one of claims 1 to 3, in which the micron-sized particles comprise a mixture of iron particles having a particle size in the range of 1 to 10 microns and 15 to 30 microns.

5. An oxygen scavenging composition for polyester resins as claimed in claim 4, wherein the ratio of the quantity of iron particles in the range of 1 to 10 microns to the ratio of the particles in the range of 15 to 30 microns is from 1: 0.10 to 1: 0.80.

6. An oxygen scavenging composition for polyester resins as claimed in any preceding claim, in which the ratio of the mass of the micron-sized iron particles to the mass of the nano-sized iron particles is in the range of 1: 0.10 to 1:0.20.

7. An oxygen scavenging composition for polyester resins as claimed in any preceding claim, in which the ratio of the mass of carrier resin to the mass of said mixture of iron particles is in the range of 1: 0.01 to 1: 0.08.

8. An oxygen scavenging composition for polyester resins as claimed in any preceding claim, in which the carrier resin is a polyester resin having a maximum melting point temperature in the range of 228 to 230° C.

9. An oxygen scavenging composition for polyester resins as claimed in any preceding claim, in which the carrier resin is an alloy of PET with Polytrimethylene Naphthalate (PTN), its co-polyesters or its blends.

10. An oxygen scavenging composition for polyester resins as claimed in any one of claims 1 to 8, in which the carrier resin is an alloy of PET with PBN, its co-polyesters or its blends.

11. An oxygen scavenging composition for polyester resins as claimed in claim 9 or 10, in which the carrier resin is PET with PBN or PTN in a ratio of a maximum of 75:25 %.

12. An oxygen scavenging composition for polyester resins as claimed in any one of claims 1 to 8, in which the carrier resin is PTN.

13. An oxygen scavenging composition for polyester resins comprising
a resin carrier;
an iron particles mixture dispersed in the said carrier
said iron particles mixture comprising
[i] micron-sized iron particles having a particle size in the range of 1 to 50 microns;
[ii] nano-sized iron particles having a particle size in the range of 5 to 50 nanometers; and
an oxidation reaction accelerator.

14. An oxygen scavenging composition for polyester resins as claimed in claim 13, in which the oxidation reaction accelerator comprises at least one alkali metal bisulfate selected from a group of alkali metal bisulfates consisting of sodium bisulfate, calcium bisulfate, potassium bisulfate, and magnesium bisulfate.

15. An oxygen scavenging composition for polyester resins as claimed in claim 14, in which the oxidation reaction accelerator comprises at least one compound selected from a group consisting of sodium bisulfate and potassium bisulfate.

16. An oxygen scavenging composition for polyester resins as claimed in claim 13, in which the oxidation reaction accelerator comprises a metal halide.

17. An oxygen scavenging composition for polyester resins as claimed in claim 16, in which the oxidation reaction accelerator comprises at least one metal halide selected from a group of metal halides consisting of Barium chloride, Calcium chloride, Iron(II) chloride, Iron(III) chloride, Lithium chloride, Magnesium chloride, Magnesium fluoride, Potassium bromide, Potassium chloride, Potassium iodide, Sodium bromide, Sodium chloride, Sodium iodide, Strontium chloride, and Zinc chloride.

18. An oxygen scavenging composition for polyester resins as claimed in claim 17, in which the oxidation reaction accelerator comprises at least one metal halide selected from a group consisting of sodium chloride and potassium chloride.

19. An oxygen scavenging composition for polyester resins as claimed in any one of claims 13 to 18, in which the oxidation reaction accelerator comprises a mixture of at least one alkali metal bisulfate and at least one metal halide.

20. An oxygen scavenging composition for polyester resins as claimed in claim 13, in which the oxidation reaction accelerator comprises ascorbic acid.

21. An oxygen scavenging composition for polyester resins as claimed in claim 13, in which the oxidation reaction accelerator comprises at least one metal ascorbate.

22. An oxygen scavenging composition for polyester resins as claimed in claim 21, in which the oxidation reaction accelerator comprises at least one metal ascorbate selected from a group consisting of sodium ascorbate, potassium ascorbate, magnesium ascorbate, calcium ascorbate, zinc ascorbate, and chromium ascorbate.

23. An oxygen scavenging composition for polyester resins as claimed in any one of claims 13 to 15 and 21 to 22, in which the oxidation reaction accelerator comprises a mixture of at least one alkali metal bisulfate and at least one metal ascorbate.

24. An oxygen scavenging composition for polyester resins as claimed in any one of claims 13, 16 to 18, and 21 to 22, in which the oxidation reaction accelerator comprises a mixture of at least one alkali metal halide, and at least one metal ascorbate.

25. An oxygen scavenging composition for polyester resins as claimed in any one of claims 13 to 19 and 21 to 23, in which the oxidation reaction accelerator comprises a mixture of at least one alkali metal bisulfate, at least one metal halide and at least one metal ascorbate.

26. An oxygen scavenging composition for polyester resins as claimed in any one of claims 13 to 25, in which the ratio of the mass of the carrier resin to the mass of the oxidation reaction accelerator is in the range of 1: 0.001 to 1: 0.01.

27. An oxygen scavenging composition for polyester resins as claimed in any preceding claim, in which the iron particles are pre-treated with a C₃ to C₈ alcohol selected from a group consisting of n-propanol, n-butanol, pentanol, hexanol, septanol and octanol, Isopropyl alcohol, Isobutyl alcohol, Sec- butyl alcohol, Tertiary butyl alcohol, Isopentyl alcohol , Tertiary pentyl alcohol, Neopentyl alcohol, Cyclopentyl alcohol, Cyclohexyl alcohol and Allyl alcohols.

28. An oxygen scavenging composition for polyester resins as claimed in claim 27, in which the iron particles are pre-treated with the C₃ to C₈ alcohol under refluxing conditions.

29. An oxygen scavenging composition for polyester resins comprising
a resin carrier;
an iron particles mixture dispersed in the said carrier
said iron particles mixture comprising
[i] micron-sized iron particles having a particle size in the range of 1 to 50 microns;
[ii] nano-sized iron particles having a particle size in the range of 5 to 50 nanometers;
an oxidation reaction accelerator; and
a barrier additive.

30. An oxygen scavenging composition for polyester resins comprising
a resin carrier;
an iron particles mixture dispersed in the said carrier
said iron particles mixture comprising .
[i] micron-sized iron particles having a particle size in the range of 1 to 50 microns;
[ii] nano-sized iron particles having a particle size in the range of 5 to 50 nanometers;
an oxidation reaction accelerator;
a barrier additive;
a color imparting additive, and an ultraviolet light absorber.

31. An oxygen scavenging composition for polyester resins as claimed in claim 29 or 30, in which the barrier additive comprises at least one barrier additive selected from a group consist of sub-micronic sized particles of clay and sub-micronic sized particles of silica .

32. A method of preparing an oxygen scavenging composition for polyester resins comprising the steps of
(i) preparing a mixture of dried micron-sized iron particles having a particle size in the range of 1 to 50 microns and dried nano-sized iron particles having a particle size in the range of 5 to 50 nanometers to form an iron particle mix;
(ii) substantially uniformly dispersing the said iron particle mix up to a maximum of 25% in a resin carrier to form a master batch ; and
(iii) storing the said master batch in an inert atmosphere until required for adding to a polyester resin.

33. A method of preparing an oxygen scavenging composition for polyester resins comprising the steps of
(i) preparing a mixture of dried micron-sized iron particles having a particle size in the range of 1 to 50 microns and dried nano-sized iron particles having a particle size in the range of 5 to 50 nanometers to form an iron particle mix and adding at least one oxidation reaction accelerator to the iron particle mix to form a dry homogenous mixture;
(ii) substantially uniformly dispersing the said homogenous mixture up to a maximum of 25% in a resin carrier to form a master batch ; and
(iii) storing the said master batch in an inert atmosphere until required for adding to a polyester resin.

34. A method of preparing an oxygen scavenging composition for polyester resins as claimed in claim 32 or 33, wherein the iron particle mix or the homogenous mixture is refluxed with at least one alcohol from the C3 to C8 group of alcohols and the resultant mixture is dried at up to 75 degrees Celsius.

35. A method of preparing an oxygen scavenging composition for polyester resins as claimed in any one of claims 32 to 34, in which the step of dispersing the said iron particle mix in the resin carrier is performed by adding the iron particle mix to the resin carrier in an extruder after mixing the said iron particle mix, maintaining the extruder at a temperature between 260 degrees Celsius and 285 degrees Celsius, extruding a strand of iron mix dispersed carrier resin, cooling the strand and cutting the strand into master batch chips.

36. A method of imparting oxygen scavenging properties to a polyester resin comprising the steps of
(i) preparing a master batch containing an oxygen scavenging composition comprising a resin carrier; and an iron particles mixture dispersed in the said resin carrier, said iron particles mixture comprising
[a] micron-sized iron particles having a particle size in the range of 1 to 50 microns;
[b] nano-sized iron particles having a particle size in the range of 5 to 50 nanometers
(ii) adding the said master batch to dry polyester resin prior to extrusion/injection molding/stretch blow molding the polyester resin such that the final quantity of the iron particle mix in the polyester resin is from 2500 ppm to 3500 ppm.

37. A method of imparting oxygen scavenging properties to a polyester resin as claimed in claim 36, in which the melting point of the carrier resin is from 228 degrees Celsius to 230 degrees Celsius and the melting point of the polyester resin is from 246 degrees Celsius and 250 degrees Celsius.

38. A polyester resin having incorporated therein an oxygen scavenging composition as claimed in any one of claims 1 to 31.

39. A container defined by at least one wall, wherein the wall comprises a polyester resin comprising an oxygen scavenging composition as claimed in any one of claims 1 to 31.

## Patentansprüche

1. Sauerstofffängerzusammensetzung für Polyesterharze : umfassend einen Harzcarrier und
eine Eisenpartikelmischung, die in dem Harzcarrier verteilt ist, die Eisenpartikelmischung umfasst
[i] mikrometergroße Eisenpartikel mit einer Partikelgröße im Bereich von 1 bis 50 Mikrometer;
[ii] nanometergroße Eisenpartikel mit einer Partikelgröße im Bereich von 5 bis 50 Nanometer.

2. Sauerstofffängerzusammensetzung für Polyesterharze nach Anspruch 1, in der die mikrometergroße Eisenpartikelmischung Partikel umfasst, die eine Partikelgröße im Bereich von 1 bis 10 Mikrometer aufweisen.

3. Sauerstofffängerzusammensetzung für Polyesterharze nach Anspruch 1, in der die mikrometergroße Eisenpartikelmischung Partikel umfasst, die eine Partikelgröße im Bereich von 15 bis 30 Mikrometer aufweisen.

4. Sauerstofffängerzusammensetzung für Polyesterharze nach einem der Ansprüche 1 bis 3, in der die mikrometergroßen Eisenpartikel eine Mischung an Eisenpartikel umfassen, die eine Partikelgröße im Bereich von 1 bis 10 Mikrometer und 15 bis 30 Mikrometer aufweisen.

5. Sauerstofffängerzusammensetzung für Polyesterharze nach Anspruch 4, in der das Verhältnis der Menge an Eisenpartikeln im Bereich von 1 bis 10 Mikrometer zu dem Verhältnis der Partikel im Bereich von 15 bis 30 Mikrometer von 1 : 0,10 bis 1 : 0,80 liegt.

6. Sauerstofffängerzusammensetzung für Polyesterharze nach einem der vorherigen Ansprüche, bei der das Verhältnis der Masse der mikrometergroßen Eisenpartikel zu der Masse der nanometergroßen Eisenpartikel im Bereich von 1 : 0,10 bis 1 : 0,20 liegt.

7. Sauerstofffängerzusammensetzung für Polyesterharze nach einem der vorherigen Ansprüche, bei der das Verhältnis der Masse des Carrierharzes zu der Masse der Mischung der Eisenpartikel im Bereich von 1 : 0,01 bis 1 : 0,80 liegt.

8. Sauerstofffängerzusammensetzung für Polyesterharze nach einem der vorherigen Ansprüche, bei der das Carrierharz ein Polyesterharz mit einem maximalen Schmelzpunkt im Bereich von 228 bis 230°C ist.

9. Sauerstofffängerzusammensetzung für Polyesterharze nach einem der vorherigen Ansprüche, bei der das Carrierharz eine Legierung eines PET mit Potytrimethylen-Naphthatat (PTN), ihrer Copolyester und ihrer Mischungen ist.

10. Sauerstofffängerzusammensetzung für Polyesterharze nach einem der Ansprüche 1 bis 8, bei der das Carrierharz eine Legierung eines PET mit PBN, ihrer Copolyester oder ihrer Mischungen ist.

11. Sauerstofffängerzusammensetzung für Polyesterharze nach einem der Ansprüche 9 oder 10, bei der das Carrierharz PET mit PBN oder PTN im Verhältnis von maximal 75 : 25 % ist.

12. Sauerstofffängerzusammensetzung für Polyesterharze nach einem der Ansprüche 1. bis 8, bei der das Carrierharz PTN ist.

13. Sauerstofffängerzusammensetzung für Polyesterharze umfassend einen Harzcarrier und
eine Eisenpartikelmischung, die in dem Harzcarrier verteilt ist, die Eisenpartikelmischung umfasst
[i] mikrometergroße Eisenpartikel mit einer Partikelgröße im Bereich von 1 bis 50 Mikrometer;
[ii] nanometergroße Eisenpartikel mit einer Partikelgröße im Bereich von 5 bis 50 Nanometer;
und einen Oxidationsreaktionsbeschleuniger.

14. Sauerstofffängerzusammensetzung für Polyesterharze nach Anspruch 13, bei der der Oxidationsreaktionsbeschleuniger mindestens ein Alkalimetallhydrogensulfat, ausgewählt ; aus der Gruppe der Alkalimetallhydrogensulfate, bestehend :aus Natriumhydrogensulfat, Calciumhydrogensulfat, Kaliumhydrogensulfat und Magnesiumhydrogensulfat, umfasst.

15. Sauerstofffängerzusammensetzung für Polyesterharze nach Anspruch 14, bei der der Oxidationsreaktionsbeschleuniger mindestens eine Verbindung, ausgewählt aus der Gruppe, bestehend aus Natriumhydrogensulfat und Kaliumhydrogensulfat, umfasst.

16. Sauerstofffängerzusammensetzung für Polyesterharze nach Anspruch 13, bei der der Oxidationsreaktionsbeschleuniger ein Metallhalogenid umfasst.

17. Sauerstofffängerzusammensetzung für Polyesterharze nach Anspruch 16, bei der der Oxidationsreaktionsbeschleuniger mindestens ein Metallhalogenid, ausgewählt aus der Gruppe von Metallhalogeniden, bestehend aus Bariumchlorid, Calciumchlorid, Eisen(II)chlorid, Eisen(III)chlorid, Lithiumchlorid, Magnesiumchlorid, Magnesiumfluorid, Kaliumbromid, Kaliumchlorid, Kaliumiodid, Natriumbromid, Natriumchlorid, Natriumiodid, Strontiumchlorid und Zinkchlorid, umfasst.

18. Sauerstofffängerzusammensetzung für Polyesterharze nach Anspruch 17, bei der der Oxidationsreaktionsbeschleuniger mindestens ein Metallhalogenid, ausgewählt aus der Gruppe von Metallhalogeniden, bestehend aus Natriumchlorid und Kaliumchlorid, umfasst.

19. Sauerstofffängerzusammensetzung für Polyesterharze nach einem der Ansprüche 13 bis 18, bei der der Oxidationsreaktionsbeschleuniger mindestens eine Mischung aus mindestens einem Alkalimetallhydrogensulfat und mindestens einem Metallhalogenid umfasst.

20. Sauerstofffängerzusammensetzung für Polyesterharze nach Anspruch 13, bei der der Oxidationsreaktionsbeschleuniger Ascorbinsäure umfasst.

21. Sauerstofffängerzusammensetzung für Polyesterharze nach Anspruch 13, bei der der Oxidationsreaktionsbeschleuniger mindestens ein Metallascorbat umfasst.

22. Sauerstofffängerzusammensetzung für Polyesterharze nach Anspruch 13, bei der der Oxidationsreaktionsbeschleuniger mindestens ein Metallascorbat, ausgewählt aus der Gruppe, bestehend aus Natriumascorbat, Kaliumascorbat, Magnesiumascorbat, Calciumascorbat, Zinkascorbat und Chromascorbat, umfasst.

23. Sauerstofffängerzusammensetzung für Polyesterharze nach einem der Ansprüche 13 bis 15 und 21 bis 22, in der der Oxidationsreaktionsbeschleuniger eine Mischung aus mindestens einem Alkalimetallhydrogensulfat und mindestens einem Metallascorbat umfasst.

24. Sauerstofffängerzusammensetzung für Polyesterharze nach einem der Ansprüche 13, 16 bis 18 und 21 bis 22, in der der Oxidationsreaktionsbeschleuniger mindestens ein Alkalimetallhalogernid und mindestens ein Metallascorbat umfasst.

25. Sauerstofffängerzusammensetzung für Polyesterharze nach einem der Ansprüche 13 bis 19 und 21 bis 23, in der der Oxidationsreaktiortsbeschleuniger mindestens ein Alkalimetallhydrogensulfat, mindestens ein Metallhalogenid und mindestens ein Metallascorbat umfasst.

26. Sauerstofffängerzusammensetzung für Polyesterharze nach einem der Ansprüche 13 bis 25; in der das Verhältnis der Masse des Carrierharzes zu der Masse des Oxidationsreaktionsbeschleunigers im Bereich von 1 : 0,001 bis 1 : 0,01 liegt.

27. Sauerstofffängerzusammensetzung für Polyesterharze nach einem der vorherigen Ansprüche, in der die Eisenpartikel mit einem C₃- bis C₈-Alkohlol, ausgewählt aus der Gruppe, bestehend aus n-Propanol, n-Butanol, Pentanol, Hexanol, Septanol und Oktanol, Isopropylalkohol, Isobutylalkohol, sec.-Butylalkohol, tert.-Butylalkohol, Isopentylalkohol, tert.-Pentylalkohol, Neopentylalkohol, Cyclopentylalkohol, Cyclohexylalkohol und Allylalkohole, vorbehandelt werden.

28. Sauerstofffängerzusammensetzung für Polyesterharze nach Anspruch 27, in der die Eisenpartikel mit dem C₃- bis C₈-Alkohlol unter Rückflußbedingungen vorbehandelt werden.

29. Sauerstofffängerzusämmensetzung für Polyesterharze umfassend einen Harzcarrier und
eine Eisenpartikelmischung, die in dem Harzcarrier verteilt ist, die Eisenpartikelmischung umfasst
[i] mikrometergroße Eisenpartikel mit einer Partikelgröße im Bereich von 1 bis 50 Mikrometer;
[ii] nanometergroße Eisenpartikel mit einer Partikelgröße im Bereich von 5 bis 50 Nanometer;
einen Oxidationsreaktionsbeschleuniger; und
ein Barrierezusatzmittel.

30. Sauerstofffängerzusammensetzung für Polyesterharze umfassend einen Harzcarrier und
eine Eisenpartikelmischung, die in dem Harzcarrier verteilt ist,
die Eisenpartikelmischung umfasst
[i] mikrometergroße Eisenpartikel mit einer Partikelgröße im Bereich von 1 bis 50 Mikrometer;
[ii] nanometergroße Eisenpartikel mit einer Partikelgröße im Bereich von 5 bis 50 Nanometer;
einen Oxidationsreaktionsbeschleuniger;
ein Barrierezusatzmittel;
ein Zusatzmittel zur Vermittlung von Farbe und ein Absorptionsmittel für ultraviolettes Licht.

31. Sauerstofffängerzusammensetzung für Polyesterharze nach einem der Ansprüche 29 oder 30, in der das Barrierezusatzmittel mindestens ein Barrierezusatzmittel, ausgewählt aus der Gruppe, bestehend aus sub-mikrometergroßen Tonteilchen und sub-mikrometergroßen Siliziumdioxidteilchen, umfasst.

32. Verfahren zur Herstellung einer Sauerstofffängerzusammensetzung für Polyesterharze umfassend die Schritte
(i) Herstellung einer Mischung aus trockenen mikrometergroßen Eisenpartikeln mit einer Partikelgröße im Bereich von 1 bis 50 Mikrometer und trockenen nanometergrößen Eisenpartikeln mit einer Teilchengröße im Bereich von 5 bis 50 Nanometer, um ein Eisenpartikelgemisch herzustellen;
(ii) im wesentlichen einheitliche Verteilung des Eisenpartikelgemisches bis zu einem Maximum von 25% in einem Harzcarrier, um einen Masterbatch zu bilden; und
(iii) Lagerung dieses Masterbatches in einer inerten Atmosphäre, bis dieser zur Zugabe zu einem Polyesterharz benötigt wird.

33. Verfahren zur Herstellung einer Sauerstofffängerzusammernsetzung für Polyesterharze umfassend die Schritte
(i) Herstellung einer Mischung aus trockenen mikrometergroßen Eisenpartikeln mit einer Partikelgröße im Bereich von 1 bis 50 Mikrometer und trockenen nanometergroßen Eisenpartikeln mit einer Teilchengröße im Bereich von 5 bis 50 Nanometer, um ein Eisenpartikelgemisch herzustellen und Zugabe von mindestens einem Oxidationsreaktionsbeschleunigers zu dem Eisenpartikelgemisch, um eine trockene homogene Mischung herzustellen;
(ii) im wesentlichen einheitliche Verteilung des Eisenpartikelgemisches bis zu einem Maximum von 25% in einem Harzcarrier, um einen Masterbatch zu bilden; und
(iii) Lagerung dieses. Masterbatches in einer inerten Atmosphäre, bis dieser zur Zugabe zu einem Polyesterharz benötigt wird.

34. Verfahren zur Herstellung einer Sauerstofffängerzusammensetzung für Polyesterharze nach einem der Ansprüche 32 oder 33, bei dem das Eisenpartikelgemisch oder die homogene Mischung mit mindestens einem Alkohol aus der Gruppe der C₃- bis C₈-Alkohole unter Rückfluß erhitzt wird und die erhaltene Mischung bei bis zu 75°C getrocknet wird.

35. Verfahren zur Herstellung einer Sauerstofffängerzusammensetzung für Polyesterharze nach einem der Ansprüche 32 bis 34, bei dem der Schritt der Verteilung des Eisenpartikelgemisches in dem Harzcarrier durchgeführt wird durch Zugabe des Eisenpartikelgemisches zu dem Harzcarrier in einem Extruder nach dem Mischen des Eisenpartikelgemisches, Halten des Extruders bei einer Temperatur zwischen 260°C und 285°C, Extrusion eines Stranges des in dem Carrierharz verteilten Eisengemisches, der Abkühlung des Stranges und Schneiden des Stranges in Masterbatchchips.

36. Verfahren zur Herstellung einer Sauerstofffängerzusammensetzung für Polyesterharze umfassend die Schritte
(i) Herstellung eines Masterbatches enthaltend eine Sauerstofffängerzusammensetzung umfassend einen Harzcarrier; und eine Eisenpartikelmischung, die in dem Harzcarrier verteilt ist, die Eisenpartikelmischung umfasst
[a] mikrometergroße Eisenpartikel mit einer Partikelgröße im Bereich von 1 bis 50 Mikrometer;
[b] nanometergroße Eisenpartikel mit einer Partikelgröße im Bereich von 5 bis 50 Nanometer.
(ii) Zugabe des Masterbatches zu trockenem Polyesterharz vor der Extrusion-/Spritzguss-/Streckblas-Formung des Polyesterharzes, so dass die endgültige Quantität des Eisenpartikelgemisches in dem Polyesterharz von 2500 ppm bis 3500 ppm reicht.

37. Verfahren zur Weitergabe von Sauerstofffängereigenschaften an ein Polyesterharz nach Anspruch 36, bei dem der Schmelzpunkt des Carrierharzes von 228°C bis 230°C reicht und der Schmelzpunkt des Polyesterharzes von 246°C bis 250°C reicht.

38. Polyesterharz in das eine Sauerstofffängerzusammensetzung nach einem der Ansprüche 1 bis 31 eingearbeitet ist.

39. Behälter, der durch mindestens eine Wand definiert ist, wobei die Wand ein Polyesterharz umfasst, die eine Sauerstofffängerzusammensetzung nach einem der Ansprüche 1 bis 31 aufweist.

## Revendications

1. Composition d'absorption d'oxygène pour des résines de polyester comprenant .
- un support de résine ; et
- un mélange de particules de fer dispersé dans ledit support de résine, ledit mélange de particules de fer comprenant :
[i] des particules de fer de dimension micronique ayant une dimension de particule dans la plage de 1 à 50 microns ;
[ii] des particules de fer de dimension nanométrique ayant une dimension de particule dans la plage de 5 à 50 nanomètres.

2. Composition d'absorption d'oxygène pour des résines de polyester, selon la revendication 1, dans laquelle le mélange de particules de fer de dimension micronique comprend des particules ayant une dimension de particule dans la plage de 1 à 10 microns.

3. Composition d'absorption d'oxygène pour des résines de polyester, selon la revendication 1, dans laquelle le mélange de particules de fer de dimension micronique comprend des particules ayant une dimension de particule dans la plage de 15 à 30 microns.

4. Composition d'absorption d'oxygène pour des résines de polyester, selon l'une quelconque des revendications 1 à 3, dans laquelle les particules de fer de dimension micronique comprennent un mélange de particules de fer ayant une dimension de particule dans la plage de 1 à 10 microns et de 15 à 30 microns.

5. Composition d'absorption d'oxygène pour des résines de polyester, selon la revendication 4, dans laquelle le rapport de la quantité de particules de fer dans la plage de 1 à 10 microns à la quantité des particules dans la plage de 15 à 30 microns est de 1:0,10 à 1:0,80.

6. Composition d'absorption d'oxygène pour des résines de polyester, selon l'une quelconque des revendications précédentes, dans laquelle le rapport de la masse des particules de fer de dimension micronique à la masse des particules de fer de dimension nanométrique est dans la plage de 1:0,10 à 1:0,20.

7. Composition d'absorption d'oxygène pour des résines de polyester, selon l'une quelconque des revendications précédentes, dans laquelle le rapport de la masse de résine support à la masse dudit mélange de particules de fer est dans la plage de 1:0,01 à 1:0,08.

8. Composition d'absorption d'oxygène pour des résines de polyester, selon l'une quelconque des revendications précédentes, dans laquelle la résine de support est une résine de polyester ayant une température de point de fusion maximale dans la plage de 228 à 230°C.

9. Composition d'absorption d'oxygène pour des résines de polyester, selon l'une quelconque des revendications précédentes, dans laquelle la résine de support est un alliage de PET avec du Polytriméthylène Naphtalate (PTN), ses co-polyesters ou ses mélanges.

10. Composition d'absorption d'oxygène pour des résines de polyester, selon l'une quelconque des revendications 1 à 8, dans laquelle la résine de support est un alliage de PET avec PBN, ses co-polyesters ou ses mélanges.

11. Composition d'absorption d'oxygène pour des résines de polyester, selon l'une des revendications 9 ou 10, dans laquelle la résine de support est du PET avec du PBN ou du PTN dans un rapport d'un maximum de 75:25%.

12. Composition d'absorption d'oxygène pour des résines de polyester, selon l'une quelconque des revendications 1 à 8, dans laquelle la résine de support est du PTN.

13. Composition d'absorption d'oxygène pour des résines de polyester comprenant :
- un support de résine ; et
- un mélange de particules de fer dispersé dans ledit support de résine, ledit mélange de particules de fer comprenant :
[i] des particules de fer de dimension micronique ayant une dimension de particule dans la plage de 1 à 50 microns ;
[ii] des particules de fer de dimension nanométrique ayant une dimension de particule dans la plage de 5 à 50 nanomètres ; et
- un accélérateur de réaction d'oxydation.

14. Composition d'absorption d'oxygène pour des résines de polyester, selon la revendication 13, dans laquelle l'accélérateur de réaction d'oxydation comprend au moins un bisulfate de métal alcalin choisi dans un groupe constitué par les bisulfates de métaux alcalins consistant en le bisulfate de sodium, le bisulfate de calcium, le bisulfate de potassium et le bisulfate de magnésium.

15. Composition d'absorption d'oxygène pour des résines de polyester, selon la revendication 14, dans laquelle l'accélérateur de réaction d'oxydation comprend au moins un composé choisi dans un groupe constitué par le bisulfate de sodium et le bisulfate de potassium.

16. Composition d'absorption d'oxygène pour des résines de polyester, selon la revendication 13, dans laquelle l'accélérateur de réaction d'oxydation comprend un halogénure métallique.

17. Composition d'absorption d'oxygène pour des résines de polyester, selon la revendication 16, dans laquelle l'accélérateur de réaction d'oxydation comprend au moins un halogénure métallique choisi dans un groupe constitué par les halogénures métalliques consistant en le Chlorure de Baryum, le Chlorure de Calcium, le Chlorure de Fer(II), le Chlorure de Fer(III), le Chlorure de Lithium, le Chlorure de Magnésium, le Fluorure de Magnésium, le Bromure de Potassium, le Chlorure de Potassium, l'Iodure de Potassium, le Bromure de Sodium, le Chlorure de Sodium, l'Iodure de Sodium, le Chlorure de Strontium et le Chlorure de Zinc.

18. Composition d'absorption d'oxygène pour des résines de polyester, selon la revendication 17, dans laquelle l'accélérateur de réaction d'oxydation comprend au moins un halogénure métallique choisi dans un groupe constitué par le chlorure de sodium et le chlorure de potassium.

19. Composition d'absorption d'oxygène pour des résines de polyester, selon l'une quelconque des revendications 13 à 18, dans laquelle l'accélérateur de réaction d'oxydation comprend un mélange d'au moins un bisulfate de métal alcalin et au moins un halogénure métallique.

20. Composition d'absorption d'oxygène pour des résines de polyester, selon la revendication 13, dans laquelle l'accélérateur de réaction d'oxydation comprend de l'acide ascorbique.

21. Composition d'absorption d'oxygène pour des résines de polyester, selon la revendication 13, dans laquelle l'accélérateur de réaction d'oxydation comprend au moins un ascorbate métallique.

22. Composition d'absorption d'oxygène pour des résines de polyester, selon la revendication 21, dans laquelle l'accélérateur de réaction d'oxydation comprend au moins un ascorbate métallique choisi dans un groupe constitué par l'ascorbate de sodium, l'ascorbate de potassium, l'ascorbate de magnésium, l'ascorbate de calcium, l'ascorbate de zinc et l'ascorbate de chrome.

23. Composition d'absorption d'oxygène pour des résines de polyester, selon l'une quelconque des revendications 13 à 15 et 21 à 22, dans laquelle l'accélérateur de réaction d'oxydation comprend un mélange d'au moins un bisulfate de métal alcalin et d'au moins un ascorbate métallique.

24. Composition d'absorption d'oxygène pour des résines de polyester, selon l'une quelconque des revendications 13, 16 à 18 et 21 à 22, dans laquelle l'accélérateur de réaction d'oxydation comprend un mélange d'au moins un halogénure de métal alcalin et d'au moins un ascorbate métallique.

25. Composition d'absorption d'oxygène pour des résines de polyester, selon l'une quelconque des revendications 13 à 19 et 21 à 23, dans laquelle l'accélérateur de réaction d'oxydation comprend un mélange d'au moins un bisulfate de métal alcalin, d'au moins un halogénure métallique et d'au moins un ascorbate métallique.

26. Composition d'absorption d'oxygène pour des résines de polyester, selon l'une quelconque des revendications 13 à 25, dans laquelle le rapport de la masse de la résine de support à la masse de l'accélérateur de réaction d'oxydation est dans la plage de 1:0,001 à 1:0,01.

27. Composition d'absorption d'oxygène pour des résines de polyester, selon l'une quelconque des revendications précédentes, dans laquelle les particules de fer sont prétraitées par un alcool en C₃ à C₈ choisi dans un groupe constitué par le n-propanol, le n-butanol, le pentanol, l'hexanol, l'heptanol et l'octanol, l'Alcool Isopropylique, l'Alcool Isobutylique, l'Alcool Sec-butylique, l'Alcool Tert-butylique, l'Alcool Isopentylique, l'Alcool Tert-Pentylique, l'Alcool Néopentylique, l'Alcool Cyclopentylique, l'Alcool Cyclohexylique et les Alcools Allyliques.

28. Composition d'absorption d'oxygène pour des résines de polyester, selon la revendication 27, dans laquelle les particules de fer sont prétraitées par l'alcool en C₃ à C₈ dans des conditions de reflux.

29. Composition d'absorption d'oxygène pour des résines de polyester, comprenant :
- un support de résine ; et
- un mélange de particules de fer dispersé dans ledit support de résine, ledit mélange de particules de fer comprenant :
[i] des particules de fer de dimension micronique ayant une dimension de particule dans la plage de 1 à 50 microns ;
[ii] des particules de fer de dimension nanométrique ayant une dimension de particule dans la plage de 5 à 50 nanomètres ;
- un accélérateur de réaction d'oxydation ; et
- un additif barrière.

30. Composition d'absorption d'oxygène pour des résines de polyester, comprenant :
- un support de résine ; et
- un mélange de particules de fer dispersé dans ledit support de résine, ledit mélange de particules de fer comprenant :
[i] des particules de fer de dimension micronique ayant une dimension de particule dans la plage de 1 à 50 microns ;
[ii] des particules de fer de dimension nanométrique ayant une dimension de particule dans la plage de 5 à 50 nanomètres ;
- un accélérateur de réaction d'oxydation ;
- un additif barrière ;
- un additif conférant la couleur ; et
- un agent absorbant la lumière ultraviolette.

31. Composition d'absorption d'oxygène pour des résines de polyester, selon l'une des revendications 29 ou 30, dans laquelle l'additif barrière comprend au moins un additif barrière choisi dans un groupe constitué par des particules, d'argile de dimension submicronique et des particules de silice de dimension submicronique.

32. Procédé de préparation d'une composition d'absorption d'oxygène pour des résines de polyester, comprenant les étapes consistant à :
(i) préparer un mélange de particules de fer de dimension micronique, séchées, ayant une dimension de particule dans le plage de 1 à 50 microns, et de particules de fer de dimension nanométrique, séchées, ayant une dimension de particule dans la plage de 5 à 50 nanomètres pour former un mélange de particules de fer ;
(ii) disperser de façon sensiblement uniforme ledit mélange de particules de fer jusqu'à un maximum de 25% dans un support de résine pour former un mélange-maître ; et
(iii) stocker ledit mélange-maître dans une atmosphère inerte jusqu'au moment requis pour l'ajouter à une résine de polyester.

33. Procédé de préparation d'une composition d'absorption d'oxygène pour des résines de polyester, comprenant les étapes consistant à :
(i) préparer un mélange de particules de fer de dimension micronique, séchées, ayant une dimension de particule dans la plage de 1 à 50 microns, et de particules de fer de dimension nanométrique, séchées, ayant une dimension de particule dans la plage de 5 à 50 nanomètres pour former un mélange de particules de fer et ajouter au moins un accélérateur de réaction d'oxydation au mélange de particules de fer pour former un mélange homogène sec ;
(ii) disperser de façon sensiblement uniforme ledit mélange homogène jusqu'à un maximum de 25% dans un support de résine pour former un mélange-maître ; et
(iii) stocker ledit mélange maître dans une atmosphère inerte jusqu'au moment requis pour l'ajouter à une résine de polyester.

34. Procédé de préparation d'une composition d'absorption d'oxygène pour des résines de polyester, selon l'une des revendications 32 ou 33, dans lequel le mélange de particules de fer ou le mélange homogène est porté au reflux avec au moins un alcool choisi dans le groupe d'alcools en C₃ à C₈ et le mélange résultant est séché à jusqu'à 75 degrés Celsius.

35. Procédé de préparation d'une composition d'absorption d'oxygène pour des résines de polyester, selon l'une quelconque des revendications 32 à 34, dans lequel l'étape de dispersion dudit mélange de particules de fer dans le support de résine est effectuée par l'addition du mélange de particules de fer au support de résine dans une extrudeuse après mélange dudit mélange de particules de fer, le maintien de l'extrudeuse à une température entre 260 degrés Celsius et 285 degrés Celsius, l'extrusion d'un cordon de la résine de support dans laquelle est dispersé le mélange de fer, le refroidissement du cordon et la découpe du cordon en copeaux de mélange-maître.

36. Procédé pour conférer des propriétés d'absorption d'oxygène à des résines de polyester, comprenant les étapes consistant à :
(i) préparer un mélange-maître contenant une composition d'absorption d'oxygène comprenant un support de résine et un mélange de particules de fer dispersé dans ledit support de résine, ledit mélange de particules de fer comprenant :
[a] des particules de fer de dimension micronique ayant une dimension de particule dans la plage de 1 à 50 microns ;
[b] des particules de fer de dimension nanométrique ayant une dimension de particule dans la plage de 5 à 50 nanomètres ;
(ii) ajouter ledit mélange-maître à la résine de polyester sèche avant l'extrusion/le moulage par injection/le moulage par étirage-gonflage de la résine de polyester, de telle sorte que la quantité finale du mélange de particules de fer dans la résine de polyester est de 2500 ppm à 3500 ppm.

37. Procédé pour conférer des propriétés d'absorption d'oxygène à une composition de résine de polyester, selon la revendication 36, dans laquelle le point de fusion de la résine de support est de 228 degrés Celsius à 230 degrés Celsius et le point de fusion de la résine de polyester est de 246 degrés Celsius à 250 degrés Celsius.

38. Résine de polyester dans laquelle a été incorporée une composition d'absorption d'oxygène telle que définie à l'une quelconque des revendications 1 à 31.

39. Conteneur défini par au moins une paroi, dans lequel la paroi comprend une résine de polyester comprenant une composition d'absorption d'oxygène telle que définie à l'une quelconque des revendications 1 à 31.
